# EUROPEAN PATENT APPLICATION

(11) **EP 4 803 985 A1**
(43) Date of publication of application: **09.09.2026**
(21) Application number: 24886364.9
(22) Date of filing: 01.11.2024
(51) Int. Cl.: G06F 3/041, G06F 3/044

(54) **TOUCH SENSING DEVICE AND METHOD FOR DRIVING TOUCH SENSING DEVICE**

(30) Priority: 02.11.2023 KR 20230150228; 31.10.2024 KR 20240152381
(71) Applicant: LX Semicon Co., Ltd., Daejeon 34027 (KR)
(72) Inventor: CHOI, Sang Min, Daejeon 34027 (KR); KIM, Youn Soo, Daejeon 34027 (KR); KIM, Nu Ri, Daejeon 34027 (KR)
(74) Representative: Ter Meer Steinmeister & Partner
(86) International application number: PCT/KR2024/017070
(87) International publication number: WO 2025/095693

(57) **Abstract**

A touch sensing device capable of accurately distinguishing and detecting normal touch and abnormal touch, according to one aspect of the present disclosure, comprises: a touch raw data generation unit for generating first touch raw data including first sensing values acquired through differential sensing of a plurality of touch sensing channels; a baseline reset determination unit for determining whether to reset an initial baseline by using sensing values of touch sensing channels adjacent to each other in the first touch raw data and reference values of the touch sensing channels adjacent to each other in a predetermined initial baseline; and a baseline reset unit for resetting, when the initial baseline is determined to be reset, the initial baseline by using second touch raw data including second sensing values acquired through differential sensing of the plurality of touch sensing channels.

## Description

### [Technical Field]

The present disclosure relates to a touch sensing device, and more particularly, to a touch sensing device capable of sensing a touch on a display panel.

### [Background Art]

As the information society develops, the demand for display devices to display images is increasing in various forms, and recently, various types of display devices such as liquid crystal display devices (LCDs) and organic light-emitting display devices (OLEDs) are being utilized.

Recently, instead of conventional input methods such as buttons, keyboards, and mouses, display devices including a touch screen panel capable of detecting a touch input by a user's finger, a stylus pen, or the like have been widely used. Such a display device including a touch screen panel includes a touch sensing device for accurately detecting whether a touch is present and touch coordinates (touch location).

The touch sensing device drives touch electrodes disposed on the touch screen panel to acquire sensing values and generates touch data such as whether a touch is present or a touch location using the sensing values. Specifically, the touch sensing device may generate touch sensing data based on a difference between touch raw data acquired for each touch sensing channel and a baseline. In this case, the baseline is set when there is no user touch, and it may vary depending on the state of the display device. For example, the baseline may change when the display device switches from the on state to the off state or from the off state to the on state.

However, when noise is present when the display device switches states, noise may be introduced into the baseline. For example, when the display device switches from the on state to the off state while the user's touch is still active, the user's touch may be included in the baseline. In such cases, a problem in which normal and abnormal touches may not be accurately distinguished may arise due to the inclusion of noise in the baseline that acts as a reference for generating touch data.

### [Description of Invnetion]

### [Technical Problem]

Therefore, the present disclosure is designed to solve the above problems and is for providing a touch sensing device capable of accurately distinguishing and detecting a normal touch and an abnormal touch, and a method of driving a touch sensing device.

The present disclosure is for providing a touch sensing device capable of accurately determining whether a baseline for touch sensing has been reset, and a method of driving a touch sensing device.

### [Technical Solution]

A touch sensing device according to one aspect of the present disclosure for achieving the above-described technical problem includes: a touch raw data generation unit configured to generate first touch raw data including first sensing values obtained through differential sensing of a plurality of touch sensing channels; a baseline reset determination unit configured to determine whether to reset a predetermined initial baseline using first sensing values of touch sensing channels adjacent to each other in the first touch raw data and reference values of the touch sensing channels adjacent to each other in the initial baseline; and a baseline reset unit configured to, when the initial baseline is determined to be reset, reset the initial baseline using second touch raw data including second sensing values obtained through the differential sensing of the plurality of touch sensing channels.

A method of driving a touch sensing device according to another aspect of the present disclosure for achieving the above-described technical problem includes: generating an initial baseline using initial touch raw data; generating first touch raw data including first sensing values of a plurality of touch sensing channels; determining whether to reset the initial baseline using a first difference value, which is a difference value between first sensing values of touch sensing channels adjacent to each other in the first touch raw data and a second difference value, which is a difference value between reference values of the touch sensing channels adjacent to each other in the initial baseline; generating second touch raw data including second sensing values of the plurality of touch sensing channels when the initial baseline is determined to be reset; and an operation of resetting the initial baseline using the second touch raw data.

### [Advantageous Effects]

According to the present disclosure, by resetting a baseline to prevent noise from being included in the baseline, it is possible to accurately distinguish and detect a normal touch intended by a user from an abnormal touch unintended by the user.

Additionally, according to the present disclosure, since whether to reset a baseline can be determined using both a difference value between first sensing values of adjacent touch sensing channels in first touch raw data and a difference value between reference values of adjacent touch sensing channels in an initial baseline, it is possible to accurately detect a normal touch and an abnormal touch even in a touch edge region on a touch screen panel, a region having a deviation between adjacent touch sensing channels, and when an object having a small difference between adjacent touch sensing channels, such as a metal plate, is touched.

Additionally, according to the present disclosure, even when a condition for resetting a baseline is satisfied, since the baseline is reset only when the number of times the condition for resetting the baseline is satisfied exceeds a predetermined reference number, the detection accuracy of a normal touch and an abnormal touch can be maximized.

### [Description of Drawings]

FIG. 1 is a block diagram of a display device including a touch sensing device according to one embodiment of the present disclosure.
FIG. 2 is a view schematically showing a touch screen panel and a touch sensing device according to the present disclosure.
FIG. 3 is a view exemplarily showing a differential sensing method of the touch sensing device shown in FIG. 2.
FIG. 4 is a block diagram schematically showing the configuration of a touch controller according to one embodiment of the present disclosure.
FIG. 5 is a block diagram schematically showing the configuration of a baseline reset determination unit shown in FIG. 4.
FIGS. 6a to 6c are views showing an example in which the touch sensing device determines to maintain a baseline according to one embodiment of the present disclosure.
FIGS. 7a to 7c are views showing an example in which the touch sensing device determines to reset a baseline according to one embodiment of the present disclosure.
FIG. 8 is a flowchart showing a method of driving a touch sensing device according to one embodiment of the present disclosure.

### [Mode for Invention]

The advantages and features of the present disclosure and methods of achieving them will become apparent with reference to the embodiments described below in detail in conjunction with the accompanying drawings. However, the present disclosure is not limited to the embodiments disclosed below and may be implemented in various different forms. These embodiments are provided only to make the disclosure of the present disclosure complete and to fully inform those of ordinary skill in the art of the scope of the disclosure, and the present disclosure is defined only by the scope of the claims.

Throughout the specification, the same components are substantially denoted by the same reference numerals. In the following description, detailed descriptions of components and functions known in the art and unrelated to the core components of the disclosure may be omitted.

When terms such as "comprise," "include," "have," and the like are used in the present specification, other parts may be added unless "only" is used. When a component is expressed in the singular, it is intended to include the plural unless explicitly stated otherwise.

In interpreting the components, even when there is no separate explicit description, the components are interpreted to include a margin of error.

The terms "first," "second," and the like are used to describe various components, but these components are not limited by these terms. These terms are used merely to distinguish one component from another. Accordingly, the first component described below may be the second component within the technical scope of the present disclosure.

The term "at least one" should be understood to include all combinations that can be presented from one or more related items. For example, the meaning of "at least one of the first item, the second item and the third item" may mean not only the first item, the second item or the third item individually, but also all combinations of items that can be presented from two or more of the first item, the second item and the third item.

The features of each of the various embodiments of the present disclosure may be entirely or partially combined with one another, and may be technically operated in various ways, and each embodiment may be implemented independently of one another or together in an associated relationship.

Embodiments according to the present disclosure will be described in detail below with reference to the accompanying drawings. In the following description, when it is determined that a detailed description of a known function or configuration related to the present disclosure may unnecessarily obscure the essence of the present disclosure, such detailed description will be omitted.

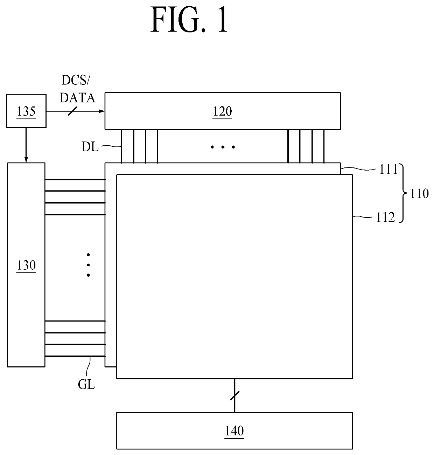

FIG. 1 is a block diagram showing a display device including a touch sensing device according to one embodiment of the present disclosure.

As shown in FIG. 1, a display device 100 including the touch sensing device according to one embodiment of the present disclosure includes a display panel 111, a touch screen panel 112, a data driving device 120, a gate driving device 130, a timing controller 135, and a touch sensing device 140.

In the display panel 111, a plurality of data lines DL connected to the data driving device 120 may be formed, and a plurality of gate lines GL connected to the gate driving device 130 may be formed. For example, the plurality of data lines DL may be disposed in a row or a column, and the plurality of gate lines GL may be disposed in a column or a row. In the following description, for convenience of description, it is assumed that the plurality of data lines DL are disposed in a row and the plurality of gate lines GL are disposed in a column.

In addition, in the display panel 111, a plurality of pixels may be defined at intersections of the plurality of data lines DL and the plurality of gate lines GL.

The display panel 111 according to the present embodiments may be a self-emissive display in which emitting devices provided in the display panel 111 emit light themselves without a separate light source such as a backlight unit, such as an organic light-emitting diode (OLED) display panel, a quantum dot display panel, and a micro light-emitting diode (LED) display panel.

A plurality of touch electrodes are formed on the touch screen panel 112 to sense a touch by a user, a stylus pen, or the like. The touch screen panel 112 may be disposed on a different layer, such as above or below the display panel 111, or implemented in a form embedded in the display panel 111. For example, the touch screen panel 112 may be disposed on the display panel 111 in an on-cell type or an in-cell type. The display panel 111 and the touch screen panel 112 may be collectively referred to as a panel 110.

The data driving device 120 may supply a data signal to the data lines DL to display the image data DATA transmitted from the timing controller 135 on each pixel of the display panel 111.

The data driving device 120 may include at least one source driver integrated circuit (IC). The at least one source driver IC may include a shift register, a latch circuit, a digital-to-analog converter (DAC), an output buffer, etc. The at least one source driver IC may, in some cases, further include an analog-to-digital converter (ADC).

The at least one source driver IC may be connected to a bonding pad of the display panel 111 using a tape automated bonding (TAB) method or a chip-on-glass (COG) method or may be directly formed on the display panel 111. In some cases, the at least one source driver IC may be integrally formed in the display panel 111. In addition, the at least one source driver IC may be implemented in a chip-on-film (COF) manner.

The gate driving device 130 sequentially drives the plurality of gate lines GL by sequentially supplying scan signals to the plurality of gate lines GL. The gate driving device 130 may include a shift register, a level shifter, etc.

The gate driving device 130 may be connected to a bonding pad of the display panel 111 using a TAB method, a COG method, or a chip-on-panel (COP) method, or may be implemented as a gate-in-panel (GIP) type and directly disposed on the display panel 111, and in some cases, may be integrally formed in the display panel 111. In addition, the gate driving device 130 may be implemented in a COF manner in which a plurality of gate driver ICs are implemented to be mounted on a gate circuit film connected to the display panel 111.

The gate driving device 130 sequentially supplies scan signals of an on voltage or an off voltage to the plurality of gate lines GL under control of the timing controller 135.

The timing controller 135 controls the data driving device 120 and the gate driving device 130. The timing controller 135 may control the data driving device 120 and the gate driving device 130 by supplying various control signals DCS and GCS required for the driving operations of the data driving device 120 and the gate driving device 130.

The timing controller 135 may start scanning according to the timing implemented in each frame, convert image data from the outside to match the data signal format used by the data driving device 120, output the converted image data DATA, and control data driving in accordance with the scan.

The timing controller 135 may receive various timing signals from the outside (for example, a host system), including a vertical synchronization signal Vsync, a horizontal synchronization signal Hsync, an input data enable (DE) signal, a clock signal CLK, and the like, along with image data.

In addition to converting image data input from the outside into a data signal format used by the data driving device 120 and outputting the converted image data DATA, the timing controller 135 may receive timing signals such as the vertical synchronization signal Vsync, the horizontal synchronization signal Hsync, the input DE signal, and the clock signal to control the data driving device 120 and the gate driving device 130, generate various control signals, and output the control signals to the data driving device 120 and the gate driving device 130.

The timing controller 135 may be implemented as a separate component from the data driving device 120 or integrated with the data driving device 120 as an integrated circuit.

The touch sensing device 140 may perform a touch sensing function of sensing a touch generated by the user, a stylus pen, or the like on the touch screen panel 112.

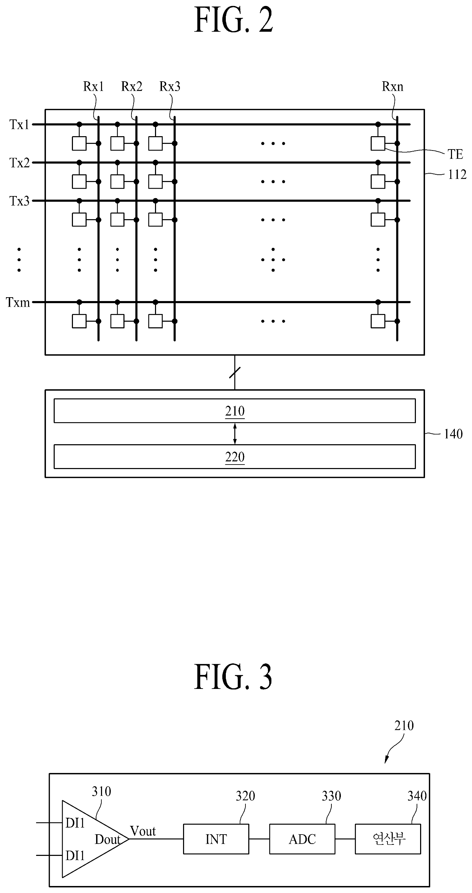

Hereinafter, the touch screen panel and the touch sensing device according to the present disclosure will be described in more detail with reference to FIG. 2.

FIG. 2 is a view schematically showing the touch screen panel and the touch sensing device according to the present disclosure.

As shown in FIG. 2, the touch screen panel 112 may include touch driving lines TX1 to TXm (where m is a natural number of 2 or more), a plurality of touch electrodes TE, and touch sensing lines RX1 to RXn (where n is a natural number of 2 or more). In one embodiment, the touch screen panel 112 may be implemented in a form embedded in the display device 100. For example, the touch screen panel 112 may be disposed in the display device 100 in an on-cell type.

The touch driving lines TX1 to TXm may transmit a touch driving signal to each of the touch electrodes TE, and each of the touch electrodes TE may include a mutual capacitor. The touch sensing lines RX1 to RXn may transmit voltages (or charges) of the touch electrodes TE to the touch sensing device 140.

The touch sensing lines RX1 to RXn may refer to sensing lines of the touch screen panel 112 and may also be referred to as touch sensing channels. Hereinafter, for convenience of description, the term "touch sensing line" and the term "touch sensing channel" will be used interchangeably.

In FIG. 2, the touch screen panel 112 is shown as a mutual capacitance type touch screen panel including touch driving lines TX1 to TXm and touch sensing lines RX1 to RXn. However, the present disclosure is not limited thereto and may also be applied to a self-capacitance type touch screen panel in which the supply of a touch driving signal and the reception of capacitance generated by the user's touch or a stylus pen touch are implemented through the touch sensing lines RX1 to RXn.

The touch sensing device 140 may drive the touch electrodes TE by supplying a touch driving signal to the touch electrodes TE and sense a change in capacitance generated when the touch electrodes TE are touched through the touch sensing channels. To this end, the touch sensing device 110B may include a touch raw data generation unit 210 and a touch controller 220. In addition, although not shown in FIG. 2, the touch sensing device 140 may further include a touch driving signal supply unit that supplies a touch driving signal to the touch electrodes TE through the touch driving lines TX1 to TXm.

The touch raw data generation unit 210 may generate touch raw data using sensing values obtained by a plurality of touch sensing channels RX1 to RXn. Specifically, the touch raw data generation unit 210 may generate initial touch raw data using initial sensing values obtained by the plurality of touch sensing channels RX1 to RXn when a state of the touch sensing device 140 changes and there is no user touch input. The initial touch raw data may be used to generate an initial baseline. For example, a change in state of the touch sensing device 140 may mean that the touch sensing device 140 is turned on as the display device 100 is turned on, or the touch sensing device 140 is turned off as the display device 100 is turned off.

In addition, when the touch raw data generation unit 210 enters an active mode in which the touch sensing device 140 can sense a touch input by the user, the touch raw data generation unit 210 may generate first touch raw data using first sensing values obtained by the plurality of touch sensing channels RX1 to RXn. The first touch raw data refers to touch raw data generated after the initial baseline is set and before the initial baseline is reset.

In one embodiment, the touch raw data generation unit 210 may obtain sensing values (initial sensing values or first sensing values) obtained by the plurality of touch sensing channels RX1 to RXn through differential sensing of adjacent touch sensing channels. For example, the touch raw data generation unit 210 may differentially sense a first touch sensing channel RX1 and a second touch sensing channel RX2 among the plurality of touch sensing channels RX1 to RXn. The touch raw data generation unit 210 according to one embodiment of the present disclosure may sense a touch using a differential sensing method, thereby canceling out various noises (induced current and deviations thereof) generated during touch sensing and obtaining accurate touch sensing results.

Hereinafter, a method in which the touch raw data generation unit 210 according to the present disclosure generates touch raw data through differential sensing will be described with reference to FIG. 3. Since a method of generating first touch raw data is the same as a method of generating initial touch raw data, for convenience of description, a method in which the touch raw data generation unit 210 generates initial touch raw data will be described below with reference to FIG. 3.

FIG. 3 is a view exemplarily showing a differential sensing method of the touch sensing device shown in FIG. 2. As shown in FIG. 3, the touch raw data generation unit 210 according to one embodiment of the present disclosure may include a differential amplifier 310, an integrator 320, and an analog-to-digital converter (ADC) 330 and a calculation unit 340.

The differential amplifier 310 may include a first input terminal DI1, a second input terminal DI2, and an output terminal DOUT. Although not shown, the differential amplifier 310 may include one or more feedback capacitors. For example, a feedback capacitor may be connected between the first input terminal DI1 and the output terminal DOUT, and a feedback capacitor may be connected between the second input terminal DI2 and the output terminal DOUT. One or two output terminals OUT of the differential amplifier DAMP may be provided.

The first input terminal DI1 of the differential amplifier 310 may be electrically connected to the first touch sensing channel RX1, and the second input terminal DI2 of the differential amplifier 310 may be electrically connected to the second touch sensing channel RX2. A first capacitance value (or a first capacitance change value) obtained through the first touch sensing channel RX1 and a second capacitance value (or a second capacitance change value) obtained through the second touch sensing channel RX2 may be input to the differential amplifier 310.

The touch raw data generation unit 210 may further include a multiplexer circuit (not shown) that selects the first touch sensing channel RX1 and the second touch sensing channel RX2 among the plurality of touch sensing channels RX1 to RXn and connects the first touch sensing channel RX1 and the second touch sensing channel RX2 to the first input terminal DI1 and the second input terminal DI2 of the differential amplifier 310. The multiplexer circuit may be included in the touch raw data generation unit 210. However, the multiplexer circuit may be mounted on the touch screen panel 112. According to this embodiment, the size of the touch sensing device 140 may be reduced.

The integrator 320 may integrate a differential sensing signal VOUT output from the output terminal DOUT of the differential amplifier 310 and output an integrated value. The ADC 330 may convert the integrated value output from the integrator 320 into a digital value.

The calculation unit 340 may generate initial touch raw data using initial sensing values for the plurality of touch sensing channels RX1 to RXn converted into digital values by the ADC 330 over n frames (where n is a natural number of 1 or more). In one embodiment, the calculation unit 340 may generate the initial touch raw data by averaging initial sensing values for the plurality of touch sensing channels RX1 to RXn converted into digital values by the ADC 330 over three frames.

The touch raw data generation unit 210 may allow the touch controller 220 to generate an initial baseline by providing initial touch raw data including initial sensing values for the plurality of touch sensing channels RX1 to RXn to the touch controller 220. In addition, the touch raw data generation unit 210 may provide first touch raw data including first sensing values for the plurality of touch sensing channels RX1 to RXn to the touch controller 220, thereby allowing the touch controller 220 to reset the initial baseline or generate touch sensing data including whether a touch is present and/or touch coordinates.

In addition, the touch raw data generation unit 210 may provide second touch raw data including second sensing values for the plurality of touch sensing channels RX1 to RXn to the touch controller 220, thereby allowing the touch controller 220 to reset the first baseline or generate touch sensing data including whether a touch is present and/or touch coordinates.

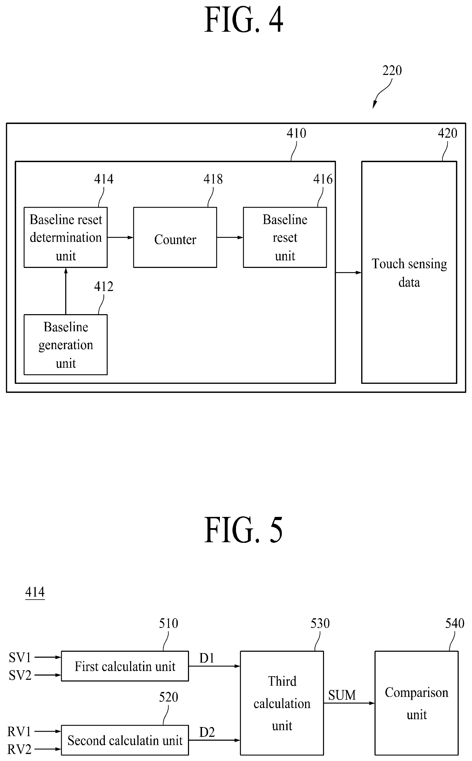

Referring again to FIG. 2, the touch controller 220 may generate touch sensing data including whether a touch is present and touch coordinates. Particularly, the touch controller 220 according to the present disclosure may reset a baseline used to generate touch sensing data based on touch raw data and a baseline. Hereinafter, the touch controller 220 according to the present disclosure will be described in more detail with reference to FIG. 4.

FIG. 4 is a block diagram schematically showing the configuration of a touch controller according to one embodiment of the present disclosure.

As shown in FIG. 4, the touch controller 220 according to one embodiment of the present disclosure may include a baseline management unit 410 and a touch sensing data generation unit 420, and the baseline management unit 410 may include a baseline generation unit 412, a baseline reset determination unit 414, and a baseline reset unit 416. In addition, the baseline management unit 410 may further include a counter 418.

The baseline generation unit 412 may generate an initial baseline. In one embodiment, the baseline generation unit 412 may generate an initial baseline using initial touch raw data generated when a state of the touch sensing device 140 changes and there is no user touch input. That is, the baseline generation unit 412 may generate a baseline that does not include noise as the initial baseline. In this case, the initial baseline may include reference values set for each of the touch sensing channels RX1 to RXn, and the reference values of each touch sensing channel RX1 to RXn may be determined by the initial sensing values of each of the touch sensing channels RX1 to RXn included in the initial touch raw data.

The baseline reset determination unit 414 may determine whether to reset the initial baseline generated by the baseline generation unit 412 or the baseline reset by the baseline reset unit 416. That is, when the baseline reset determination unit 414 determines that the initial baseline needs to be reset after the generation of the initial baseline, the initial baseline may be reset to a first baseline, and when it is determined that resetting is not required, the initial baseline may be maintained.

In addition, after the initial baseline is reset to the first baseline, when it is determined that the first baseline needs to be reset by the baseline reset determination unit 414, the first baseline is reset to a second baseline, and when it is determined that resetting is not required, the first baseline may be maintained.

The baseline reset determination unit 414 may determine whether to reset the initial baseline using first sensing values included in first touch raw data obtained after the generation of the initial baseline and the reference values included in the initial baseline. In one embodiment, the baseline reset determination unit 414 may determine whether to reset the initial baseline using the first sensing values of touch sensing channels adjacent to each other in the first touch raw data and the reference values of touch sensing channels adjacent to each other in the initial baseline.

Specifically, the baseline reset determination unit 414 may determine whether to reset the initial baseline using a first difference value, which is a difference between first sensing values of two touch sensing channels adjacent to each other in the first touch raw data and a second difference value, which is a difference between reference values of two touch sensing channels adjacent to each other in the initial baseline.

In addition, the baseline reset determination unit 414 may determine whether to reset the first baseline using the second sensing values included in second touch raw data newly generated after the generation of the first touch raw data and the reference values included in the first baseline generated according to the resetting of the initial baseline.

Since a method of resetting the initial baseline and a method of resetting the first baseline are the same, for convenience of description, only the process of resetting the initial baseline will be described below.

Hereinafter, a method in which the baseline reset determination unit 414 determines whether to reset the initial baseline will be described in more detail with reference to FIG. 5. FIG. 5 is a block diagram schematically showing the configuration of a baseline reset determination unit according to one embodiment of the present disclosure.

As shown in FIG. 5, the baseline reset determination unit 414 according to one embodiment of the present disclosure may include a first calculation unit 510, a second calculation unit 520, a third calculation unit 530, and a comparison unit 540.

The first calculation unit 510 may calculate a first difference value, which is a difference between the first sensing values of two adjacent touch sensing channels, from the first touch raw data. For example, the first calculation unit 510 may calculate a first difference value D1, which is a difference between a first value SV1 of the first touch sensing channel RX1 and a second value SV2 of a second touch sensing channel RX2 adjacent to the first touch sensing channel RX1, from the first touch raw data.

The second calculation unit 520 may calculate a second difference value, which is a difference between the reference values of two adjacent touch sensing channels, from the initial baseline. For example, the second calculation unit 520 may calculate a first difference value D2, which is a difference between a first reference value RV1 of the first touch sensing channel RX1 and a second reference value RV2 of the second touch sensing channel RX2 adjacent to the first touch sensing channel RX1, from the initial baseline.

The third calculation unit 530 may calculate, for each of a plurality of touch sensing channels RX1 to RXn, a third difference value, which is a difference between the first difference value D1 and the second difference value D2, and calculate a result value SUM by summing the third difference values calculated for the plurality of touch sensing channels.

The comparison unit 540 may determine whether to reset the initial baseline using the result value SUM calculated by the third calculation unit 530. In one embodiment, the comparison unit 540 may determine to reset the initial baseline when the result value SUM calculated by the third calculation unit 530 is less than a predetermined threshold value and determine to maintain the initial baseline when the result value SUM calculated by the third calculation unit 530 is greater than or equal to the threshold value.

In the above-described embodiment, the threshold value may be set to 0. That is, the comparison unit 540 may determine to reset the initial baseline when the result value SUM calculated by the third calculation unit 530 is less than 0 (in the case of a negative integer value) and determine to maintain the initial baseline when the result value SUM calculated by the third calculation unit 530 is greater than or equal to the threshold value (in the case of a positive integer value).

Referring again to FIG. 4, when the baseline reset determination unit 414 determines that the baseline is to be reset, the baseline reset unit 416 may reset the baseline. That is, the baseline reset unit 416 may reset the initial baseline to the first baseline when the baseline reset determination unit 414 determines to reset the initial baseline and reset the first baseline to the second baseline when the baseline reset determination unit 414 determines to reset the first baseline.

To reset the baseline, the touch raw data generation unit 210 may generate second touch raw data including second sensing values obtained through the differential sensing of the plurality of touch sensing channels RX1 to RXn, and the baseline reset unit 415 may reset the initial baseline to the first baseline by generating the first baseline using the second touch raw data. In this case, the second touch raw data may also be generated by averaging the sensing values obtained over n frames.

In the above-described embodiment, the baseline reset unit 416 has been described as resetting the baseline only when the baseline reset determination unit 414 determines to reset the baseline. However, in a modified embodiment, the baseline reset unit 416 may reset the baseline when a number of times that the baseline reset determination unit 414 determines that the baseline is to be reset exceeds a predetermined reference number.

To this end, the baseline management unit 410 according to the present disclosure may further include the counter 418. The counter 418 may count the number of times the baseline reset determination unit 414 determines that the baseline is to be reset and notify the baseline reset unit 416 of the result. The baseline reset unit 416 may reset the baseline when the counted result value exceeds a predetermined reference number.

In one embodiment, the reference number may be set variably. In this case, the reference number may be set differently depending on the type of display device 100 and the degree of degradation of the display device 100. For example, when the display device 100 is a device that is frequently touched by the user, such as a mobile device or a game console, the reference number may be set to a low value because there is a high possibility that noise will be included in the baseline. As another example, when the display device 100 is a television (TV) or a monitor in which touches occur less frequently than in a mobile device or a game console, the reference number may be set high.

As still another example, when the degree of degradation of the display device 100 is large, the reference number may be set low because there is a high possibility that noise will be included in the baseline, and when the degree of degradation of the display device 100 is small, the reference number may be set high because there is a low possibility that noise will be included in the baseline.

In the above-described embodiment, the baseline generation unit 412 and the baseline reset unit 416 have been described as being separate configurations, but this is only one example, and the baseline generation unit 412 and the baseline reset unit 416 may be implemented as a single configuration. For example, the baseline generation unit 412 may perform both the generation of an initial baseline and the resetting of a baseline, or the baseline reset unit 416 may perform both the generation of an initial baseline and the resetting of a baseline.

As described above, according to the present disclosure, the baseline management unit 410 may determine whether to reset the baseline based on the sensing values of the touch raw data and the reference values of the baseline and reset the baseline when the resetting of the baseline is required, thereby preventing noise from being included in the baseline in advance, and thus enabling accurate distinguishing and detecting of a normal touch that is intended by the user and an abnormal touch that is not intended by the user.

The touch sensing data generation unit 420 may generate touch sensing data including whether a touch is present and touch coordinates using the baseline provided from the baseline management unit 410 and the touch raw data provided from the touch raw data generation unit 210. The touch sensing data generation unit 420 may transmit the generated touch sensing data to a host system (not shown). That is, when the baseline management unit 410 determines that the initial baseline is to be maintained, the touch sensing data generation unit 420 may generate touch sensing data by comparing the first touch raw data provided by the touch raw data generation unit 210 with the initial baseline provided by the baseline management unit 410.

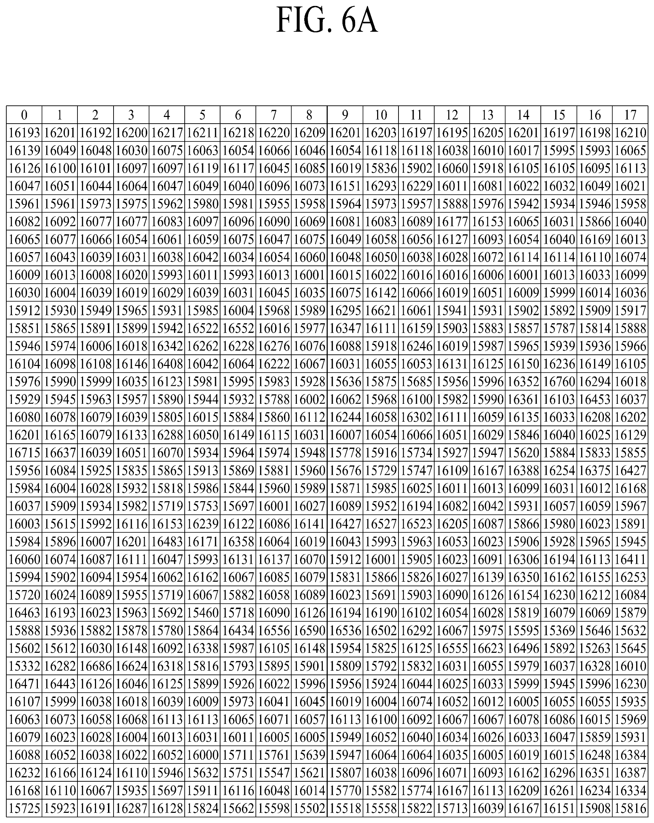

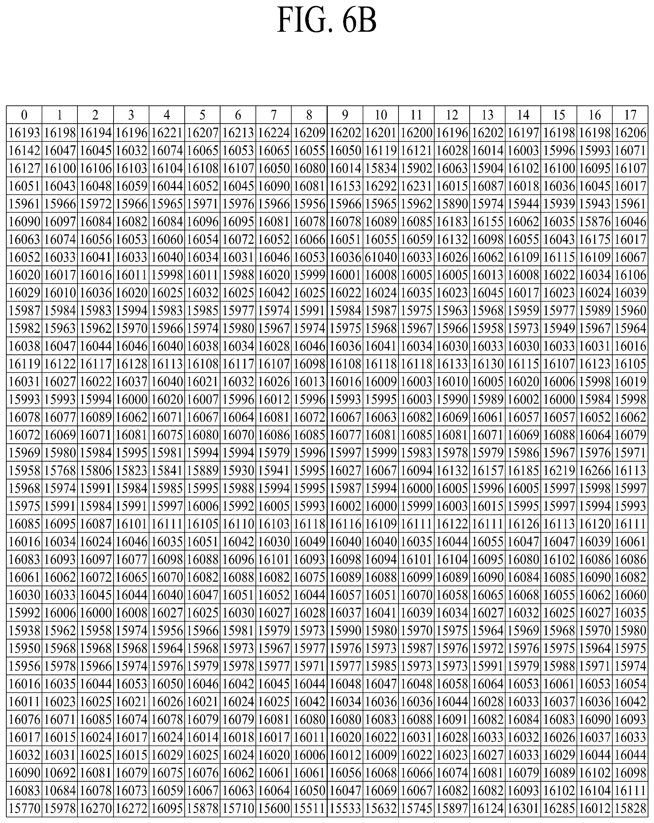

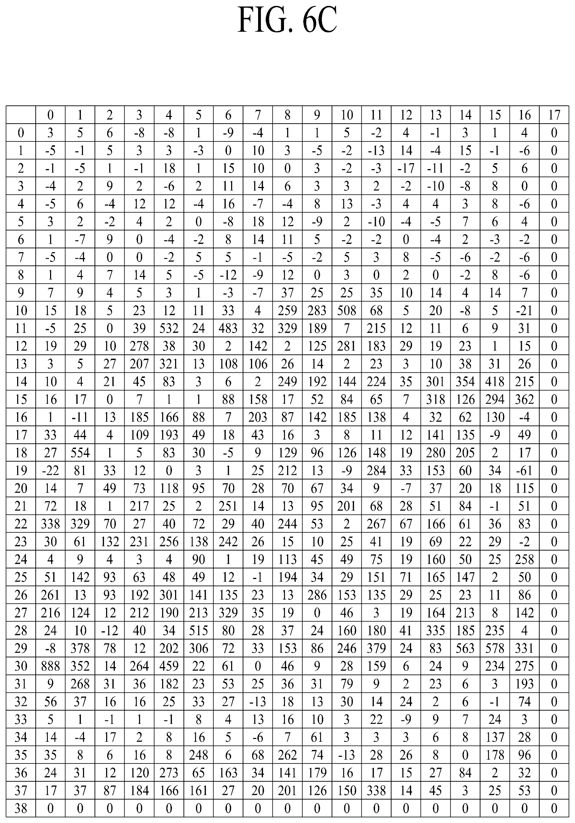

FIG. 6a is a view showing an example of touch raw data, FIG. 6b is a view showing an example of a baseline, and FIG. 6c is a view showing third difference values, which are difference values between first difference values between sensing values of adjacent touch sensing channels in the touch raw data shown in FIG. 6a and second difference values between reference values of adjacent touch sensing channels in the baseline shown in FIG. 6b.

Since the result value obtained by summing all of the third difference values shown in FIG. 6c is greater than the threshold value 0, the baseline management unit 410 according to the present disclosure may determine to maintain the baseline shown in FIG. 6b when the touch raw data shown in FIG. 6a and the baseline shown in FIG. 6b are obtained.

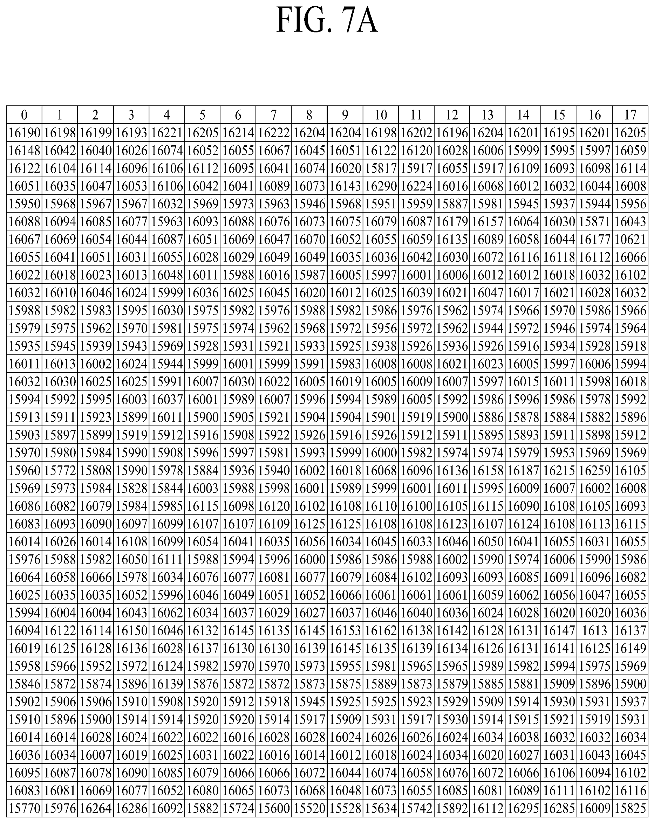

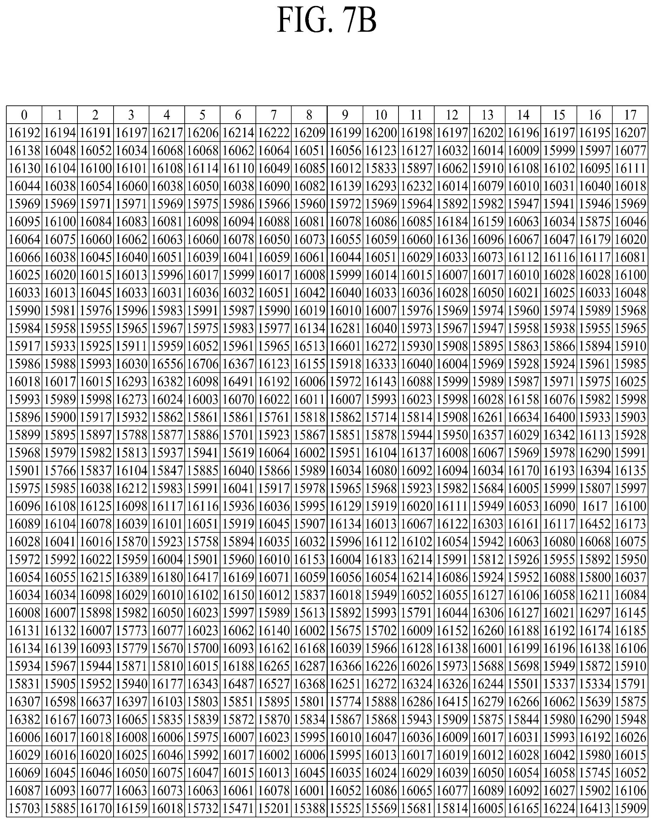

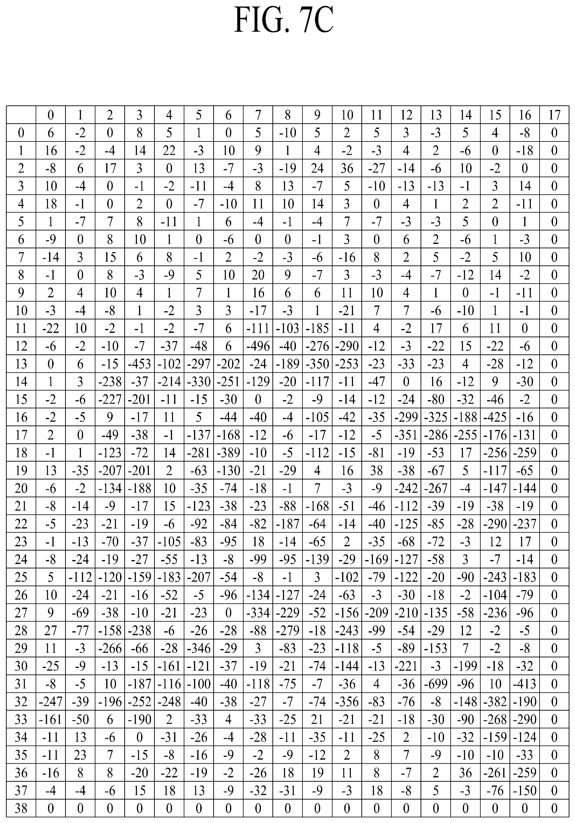

FIG. 7a is a view showing another example of touch raw data, FIG. 7b is a view showing another example of a baseline, and FIG. 7c is a view showing third difference values, which are difference values between first difference values between the sensing values between adjacent touch sensing channels in the touch raw data shown in FIG. 7a and second difference values between the reference values between adjacent touch sensing channels in the baseline shown in FIG. 7b.

Since the result value obtained by summing all of the third difference values shown in FIG. 7c is less than the threshold value 0, the baseline management unit 410 according to the present disclosure may determine to reset the baseline shown in FIG. 7B to a new baseline when the touch raw data shown in FIG. 7a and the baseline shown in FIG. 7b are obtained.

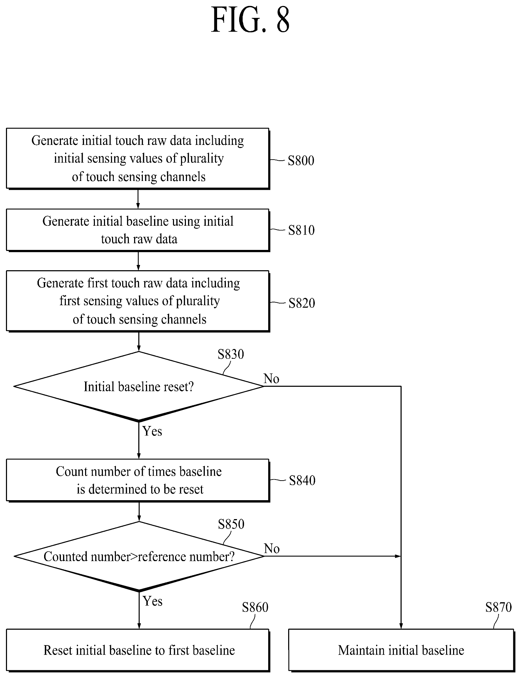

Hereinafter, a method of driving a touch sensing device according to one embodiment of the present disclosure will be described with reference to FIG. 8.

FIG. 8 is a flowchart showing the method of driving a touch sensing device according to one embodiment of the present disclosure. The method of driving a touch sensing device shown in FIG. 8 may be applied to the method of driving a touch sensing device shown in FIGS. 1 to 4.

First, as shown in FIG. 8, the touch sensing device 140 may generate initial touch raw data including initial sensing values of the plurality of touch sensing channels RX1 to RXn (S800). The touch sensing device 140 may generate touch raw data using initial sensing values obtained by the plurality of touch sensing channels RX1 to RXn. In this case, the initial sensing value may be a sensing value generated from the plurality of touch sensing channels RX1 to RXn when a state of the touch sensing device 140 changes and there is no user touch input. For example, a change in state of the touch sensing device 140 may mean that the touch sensing device 140 is turned on as the display device 100 is turned on, or that the touch sensing device 140 is turned off as the display device 100 is turned off.

In one embodiment, the touch sensing device 140 may obtain initial sensing values of the plurality of touch sensing channels RX1 to RXn through differential sensing of adjacent touch sensing channels. For example, the touch sensing device 140 may differentially sense the first touch sensing channel RX1 and the second touch sensing channel RX2 among the plurality of touch sensing channels RX1 to RXn.

Subsequently, the touch sensing device 140 may generate an initial baseline using the initial touch raw data generated in S800 (S810). That is, the touch sensing device 140 may generate an initial baseline using the initial touch raw data generated when a state of the touch sensing device 140 changes and there is no user touch input, thereby generating a baseline that does not include noise as the initial baseline. In this case, the initial baseline may include reference values set for each of the touch sensing channels RX1 to RXn, and the reference values of each of the touch sensing channels RX1 to RXn may be determined by the initial sensing values of each of the touch sensing channels RX1 to RXn included in the initial touch raw data.

Subsequently, the touch sensing device 140 may generate first touch raw data including first sensing values of the plurality of touch sensing channels RX1 to RXn (S820). Specifically, when the touch sensing device 140 enters an active mode in which the touch sensing device 140 can sense a touch input by the user, the touch sensing device 140 may generate first touch raw data using the first sensing values obtained by the plurality of touch sensing channels RX1 to RXn.

Subsequently, the touch sensing device 140 may determine whether to reset the initial baseline (S830). In one embodiment, the touch sensing device 140 may determine whether to reset the initial baseline using a first difference value, which is a difference between the first sensing values between adjacent touch sensing channels in the first touch raw data and a second difference value, which is a difference between the reference values between adjacent touch sensing channels in the initial baseline.

Specifically, the touch sensing device 140 may calculate a first difference value, which is a difference between the first sensing values of two adjacent touch sensing channels, from the first touch raw data and a second difference value, which is a difference between the reference values between two adjacent touch sensing channels, from the initial baseline. Afterward, the touch sensing device 140 may calculate a third difference value, which is a difference value between the first difference value and the second difference value, for each of the plurality of touch sensing channels, and then calculate the result value by summing the third difference values calculated for the plurality of touch sensing channels. Afterward, the touch sensing device 140 may determine to reset the initial baseline when the result value is smaller than a predetermined threshold value and determine to maintain the initial baseline when the result value is greater than or equal to the threshold value. In this case, the threshold value may be set to 0.

In the above-described embodiment, the two touch sensing channels adjacent to each other may be the first touch sensing channel RX1 connected to the first touch electrode formed on the touch screen panel and the second touch sensing channel RX2 connected to the second touch electrode adjacent to the first touch electrode on the touch screen panel.

Meanwhile, when it is determined in S830 that the initial baseline is to be reset, the touch sensing device 140 may count the number of times the baseline is determined to be reset (S840).

Afterward, the touch sensing device 140 may determine whether the counted number in S840 exceeds a predetermined reference number (S850). In one embodiment, the reference number may be set variably. In this case, the reference number may be set differently depending on the type of display device 100 and the degree of degradation of the display device 100. For example, when the display device 100 is a device that is frequently touched by the user, such as a mobile device or a game console, the reference number may be set to a low value because there is a high possibility that noise will be included in the baseline. As another example, when the display device 100 is a TV or a monitor in which touches occur less frequently than a mobile device or a game console, the reference number may be set high.

As still another example, when the degree of degradation of the display device 100 is large, the reference number may be set low because there is a high possibility that noise will be included in the baseline, and when the degree of degradation of the display device 100 is small, the reference number may be set high because there is a low possibility that noise will be included in the baseline.

When the counted number in S850 exceeds the reference number, the touch sensing device 140 may reset the initial baseline (that is, the existing initial baseline) to a first baseline (that is, a new baseline) (S860). Specifically, the touch sensing device 140 may generate second touch raw data including second sensing values of the plurality of touch sensing channels RX1 to RXn and reset the initial baseline to the first baseline by generating the first baseline using the second touch raw data.

Meanwhile, when it is determined in S830 that the initial baseline is not to be reset or when the counted number in S850 does not exceed the reference number, the touch sensing device 140 may determine to maintain the initial baseline (S870). When the touch sensing device 140 determines to maintain the initial baseline, the touch sensing device 140 may compare the first touch raw data with the initial baseline to generate touch sensing data including touch coordinates and transmit the generated touch sensing data to the host system.

A person skilled in the art to which the present disclosure pertains will understand that the above-described disclosure may be implemented in other specific forms without changing the technical concept or essential features thereof.

Therefore, the embodiments described above should be understood as illustrative in all respects and not limiting. The scope of the disclosure is defined by the claims set forth below rather than by the detailed description above, and all modifications or variations derived from the meaning and scope of the claims and equivalent concepts should be interpreted as being included within the scope of the disclosure.

## Claims

1. A touch sensing device comprising:
a touch raw data generation unit configured to generate first touch raw data including first sensing values obtained through differential sensing of a plurality of touch sensing channels;
a baseline reset determination unit configured to determine whether to reset a predetermined initial baseline using first sensing values of touch sensing channels adjacent to each other in the first touch raw data and reference values of the touch sensing channels adjacent to each other in the initial baseline; and
a baseline reset unit configured to, when the initial baseline is determined to be reset, reset the initial baseline using second touch raw data including second sensing values obtained through the differential sensing of the plurality of touch sensing channels.

2. The touch sensing device of claim 1, wherein the baseline reset determination unit includes:
a first calculation unit configured to calculate a first difference value, which is a difference value between the first sensing values of the adjacent touch sensing channels, from the first touch raw data;
a second calculation unit configured to calculate a second difference value, which is a difference value between the reference values of the adjacent touch sensing channels, from the initial baseline;
a third calculation unit configured to calculate, for each of the plurality of touch sensing channels, a third difference value, which is a difference value between the first difference value and the second difference value and calculate a result value obtained by summing third difference values calculated for the plurality of touch sensing channels; and
a comparison unit configured to determine whether to reset the initial baseline using the result value.

3. The touch sensing device of claim 2, wherein the comparison unit determines to reset the initial baseline when the result value is less than a predetermined threshold value and determines to maintain the initial baseline when the result value exceeds the threshold value.

4. The touch sensing device of claim 3, wherein the threshold value is set to 0.

5. The touch sensing device of claim 1, further comprising a counter configured to determine the number of times the baseline reset determination unit determines to reset the initial baseline,
wherein the baseline reset unit resets the initial baseline when the number of times counted by the counter exceeds a predetermined reference number.

6. The touch sensing device of claim 1, further comprising a baseline generation unit configured to generate the initial baseline using initial touch raw data including initial sensing values generated from the plurality of touch sensing channels when a state of the touch sensing device changes and there is no user touch input.

7. The touch sensing device of claim 1, wherein the touch sensing channels adjacent to each other include a first touch sensing channel connected to a first touch electrode on a touch screen panel and a second touch sensing channel connected to a second touch electrode adjacent to the first touch electrode on the touch screen panel.

8. The touch sensing device of claim 1, further comprising a touch sensing data generation unit configured to generate touch sensing data including touch coordinates by comparing the first touch raw data with the initial baseline when the baseline reset determination unit determines to maintain the initial baseline.

9. A method of driving a touch sensing device, comprising:
generating an initial baseline using initial touch raw data;
generating first touch raw data including first sensing values of a plurality of touch sensing channels;
determining whether to reset the initial baseline using a first difference value, which is a difference value between first sensing values of touch sensing channels adjacent to each other in the first touch raw data, and a second difference value, which is a difference value between reference values of the touch sensing channels adjacent to each other in the initial baseline;
generating second touch raw data including second sensing values of the plurality of touch sensing channels when the initial baseline is determined to be reset; and
resetting the initial baseline using the second touch raw data.

10. The method of claim 9, wherein the determining whether to reset the initial baseline includes:
calculating the first difference value and the second difference value;
calculating, for each of the plurality of touch sensing channels, a third difference value which is a difference value between the first difference value and the second difference value;
calculating a result value obtained by summing third difference values calculated for the plurality of touch sensing channels; and
determining to reset the initial baseline when the result value is less than a predetermined threshold value and determining to maintain the initial baseline when the result value exceeds the threshold value.

11. The method of claim 10, wherein the threshold value is set to 0.

12. The method of claim 9, further comprising counting the number of times the initial baseline is determined to be reset after the determining whether to reset the initial baseline,
wherein, in the resetting the initial baseline, the initial baseline is reset when the counted number exceeds a predetermined reference number.

13. The method of claim 9, further comprising generating touch sensing data including touch coordinates by comparing the first touch raw data with the initial baseline when it is determined that the initial baseline is maintained in the determining whether to reset the initial baseline.

14. The method of claim 9, wherein the initial touch raw data includes initial sensing values generated from the plurality of touch sensing channels when a state of the touch sensing device changes and there is no user touch input.

15. The method of claim 9, wherein the touch sensing channels adjacent to each other include a first touch sensing channel connected to a first touch electrode formed on a touch screen panel and a second touch sensing channel connected to a second touch electrode adjacent to the first touch electrode on the touch screen panel.
